# EUROPÄISCHE PATENTSCHRIFT

(11) **EP 2 755 329 B1**
(45) Veröffentlichungstag und Bekanntmachung des Hinweises auf die Patenterteilung: **28.03.2018**
(21) Anmeldenummer: 13005909.0
(22) Anmeldetag: 18.12.2013
(51) Int. Cl.: H04B 1/3877

(54) **"Kompensationsverstärkungsschaltung zum Einbau in eine Übertragungsleitung zwischen einem in einem Kraftfahrzeug befindlichen Mobilfunkgerät bzw. einer kraftfahrzeugseitigen Aufnahme für das Mobilfunkgerät einerseits und einer Antenne des Kraftfahrzeugs andererseits und Verfahren zum Betrieb einer entsprechenden bidirektionalen Kompensationsverstärkungsschaltung"**
Compensating amplification circuit for installation in a transmission line between a mobile radio set located in a motor vehicle or a vehicle-based holding fixture for the mobile radio device and an antenna of the motor vehicle, and method for operating a corresponding bidirectional compensating amplification circuit
Circuit d'amplification de compensation destiné à être intégré dans une ligne de transmission entre un appareil radio mobile situé dans un véhicule automobile ou un logement côté véhicule automobile pour l'appareil radio mobile d'une part et une antenne du véhicule automobile d'autre part, et procédé de fonctionnement d'un circuit d'amplification de compensation bidirectionnel correspondant

(30) Priorität: 09.01.2013 DE 102013000270
(43) Veröffentlichungstag der Anmeldung: 16.07.2014
(73) Patentinhaber: paragon AG, 33129 Delbrück (DE)
(72) Erfinder: Markus Neumann, 90455 Nürnberg (DE)
(74) Vertreter: Lelgemann, Karl-Heinz

(56) Entgegenhaltungen:
- EP-A2- 1 841 083
- US-A1- 2003 100 351
- US-A1- 2012 170 519

## Beschreibung

"Kompensationsverstärkungsschaltung zum Einbau in eine Übertragungsleitung zwischen einem in einem Kraftfahrzeug befindlichen Mobilfunkgerät bzw. einer kraftfahrzeugseitigen Aufnahme für das Mobilfunkgerät einerseits und einer Antenne des Kraftfahrzeugs andererseits und Verfahren zum Betrieb einer entsprechenden bidirektionalen Kompensationsverstärkungsschaltung"

Die Erfindung bezieht sich auf eine Kompensationsverstärkungsschaltung zum Einbau in eine Übertragungsleitung zwischen einem in einem Kraftfahrzeug befindlichen Mobilfunkgerät bzw. einer kraftfahrzeugseitigen Aufnahme für das Mobilfunkgerät einerseits und einer Antenne des Kraftfahrzeugs andererseits, mit einer Empfangsverstärkungsvorrichtung, mittels der ein über die Antenne des Kraftfahrzeugs empfangenes und durch die Übertragungsleitung dem Mobilfunkgerät zuzuführendes Empfangssignal verstärkbar ist, einer Sendeverstärkungsvorrichtung, mittels der ein vom Mobilfunkgerät abgesendetes und durch die Übertragungsleitung der Antenne des Kraftfahrzeugs zuzuführendes Sendesignal verstärkbar ist, einer Detektorvorrichtung, mittels der ein Betriebszustand des im Kraftfahrzeug befindlichen Mobilfunkgeräts detektier- und zu einem Detektorsignal verarbeitbar ist, einer Selektionsvorrichtung, mittels der der Betriebszustand der Kompensationsverstärkungsschaltung an den Betriebszustand des im Kraftfahrzeug befindlichen Mobilfunkgeräts anpassbar ist, und einer Auswertevorrichtung, mittels der das Detektorsignal erfassbar und mittels der die Selektionsvorrichtung in Abhängigkeit vom Detektorsignal beeinflussbar ist.

Kraftfahrzeugkarosserien wirken für zwischen in Kraftfahrzeugen befindlichen Mobilfunkgeräten und Basisstationen gesendete Funkwellen quasi wie ein Faradayscher Käfig mit begrenztem Schirmmaß. Dies hat zur Folge, dass die Sendeverstärker von Mobilfunkgeräten, sofern sich die Mobilfunkgeräte in Kraftfahrzeugen befinden, mit einer erhöhten Leistung betrieben werden müssen. Hierdurch ergeben sich hohe elektromagnetische Feldstärken im Kraftfahrzeuginnenraum und darüber hinaus eine schnelle Akkuentladung. Des Weiteren ist aufgrund der deutlich ungünstigeren Feldstärke am Empfänger nur eine niederwertige Modulation möglich, woraus sich geringere Datenraten ergeben. Da die derzeit in Gebrauch befindlichen Mobilfunkgeräte üblicherweise keine koaxialen Anschlussmittel zur Verbindung an eine kraftfahrzeugseitige Antenne, z.B. eine Dachantenne, aufweisen, kommt als Kontaktierungsmöglichkeit nur eine elektromagnetische Nahfeldkopplung in Frage. Die dadurch hervorgerufenen Einfügungsdämpfungen werden durch bidirektionale Kompensationsverstärkungsschaltungen ausgeglichen, die zwischen einem mit der elektromagnetischen Nahfeldkopplung vorgesehenen kraftfahrzeugseitigen Aufnahmeteil für das Mobilfunkgerät und der kraftfahrzeugseitigen Antenne angeordnet sind. Hierdurch können für den Nutzer negative Einflüsse des Betriebs von Mobilfunkgeräten im Kraftfahrzeug vermieden werden.

Aus der EP 1 841 083 A2 und der WO 2011/000369 A1 sind Kompensationsverstärkungsschaltungen bekannt, die etwa der eingangs geschilderten Kompensationsverstärkungsschaltung entsprechen. Diese bekannten Kompensationsverstärkungsschaltungen weisen neben Schaltern zur Signalaufteilung und Signalzusammenführung sowohl Empfangs- als auch Sendeverstärkungsvorrichtungen auf, die schmalbandig jeweils für jedes unterstützte Sende- und Empfangsband ausgelegt sind. Sofern die Anzahl der seitens der Kompensationsverstärkungsschaltungen unterstützten Frequenzbänder ansteigt, ergibt sich für die aus dem Stand der Technik bekannten Kompensationsverstärkungsschaltungen eine erhebliche Steigerung des technisch-konstruktiven Aufwands.

Ausgehend von dem vorstehend geschilderten Stand der Technik liegt der Erfindung die Aufgabe zugrunde, eine Kompensationsverstärkungsschaltung zum Einbau in eine Übertragungsleitung zwischen einem in einem Kraftfahrzeug befindlichen Mobilfunkgerät bzw. einer kraftfahrzeugseitigen Aufnahme für das Mobilfunkgerät einerseits und einer Antenne des Kraftfahrzeugs andererseits sowie ein entsprechendes Verfahren zum Betrieb einer bidirektionalen Kompensationsverstärkungsschaltung zur Verfügung zu stellen, die eine Systemarchitektur aufweist bzw. das eine Systemarchitektur nutzt, mittels der ohne großen technisch-konstruktiven Aufwand eine Vielzahl unterschiedlicher Frequenzbänder unterstützt werden kann.

Diese Aufgabe wird erfindungsgemäß dadurch gelöst, dass die Selektionsvorrichtung der Kompensationsverstärkungsschaltung Filter mit anpassbaren Übertragungscharakteristiken aufweist und dass die Übertragungscharakteristiken der Filter mittels der Auswertevorrichtung der Kompensationsverstärkungsschaltung entsprechend dem in der Detektorvorrichtung der Kompensationsverstärkungsschaltung erzeugten Detektorsignal einstellbar sind. Durch den erfindungsgemäßen Einsatz abstimmbarer Filteranordnungen in Verbindung mit Baugruppen zur Signalaufteilung und -zusammenführung wird erfindungsgemäß eine universelle und vereinfachte Systemarchitektur einer Kompensationsverstärkungsschaltung erreicht. Die im Falle der erfindungsgemäßen Kompensationsverstärkungsschaltung zum Einsatz kommenden Filterelemente basieren beispielsweise auf der MEMS-BAR- oder FBAR-Technologie.

Gemäß einer vorteilhaften Ausgestaltung der erfindungsgemäßen Kompensationsverstärkungsschaltung weist diese eine weitere Detektorvorrichtung auf, mittels der Parameter des Empfangssignals detektier- und zu einem weiteren Detektorsignal verarbeitbar sind, wobei mittels der Auswertevorrichtung das weitere Detektorsignal erfassbar und die Selektionsvorrichtung in Abhängigkeit vom weiteren Detektorsignal beeinflussbar ist, und wobei die Übertragungscharakteristiken der Filter der Selektionsvorrichtung mittels der Auswertevorrichtung entsprechend dem weiteren Detektorsignal einstellbar sind.

Vorteilhaft ist das von Parametern in einem Empfangspfad der Kompensationsverstärkungsschaltung abhängige weitere Detektorsignal mit der Auswertevorrichtung zur Beeinflussung eines mit der Übertragungscharakteristik der Sendeverstärkungsvorrichtung versehenen Sendepfads der Kompensationsverstärkungsschaltung berücksichtigbar.

Zweckmäßigerweise gehört zu der Selektionsvorrichtung ein antennenseitiger Kompensationsverstärkungssplitter, mittels dem eine Auswahl, eine Bandbreitenbegrenzung und eine Aufteilung des Sende- und des Empfangssignals realisierbar ist und dessen Übertragungscharakteristik zwischen seinen Anschlussports abstimmbar ist.

Entsprechend kann zu der Selektionsvorrichtung ein mobilfunkgeräteseitiger Kompensationsverstärkungscombiner gehören, mittels dem eine Auswahl, eine Bandbreitenbegrenzung und eine Zusammenführung des Sende- und des Empfangssignals realisierbar ist und dessen Übertragungscharakteristik zwischen seinen Anschlussports abstimmbar ist.

Die Empfangsverstärkungsvorrichtung der erfindungsgemäßen Kompensationsverstärkungsschaltung ist vorteilhaft breitbandig ausgeführt und in ihrer Bandbreite mittels der Auswertevorrichtung initiiert abstimmbar.

Gemäß einer weiteren vorteilhaften Ausführungsform der erfindungsgemäßen Kompensationsverstärkungsschaltung ist zwischen der Empfangsverstärkungsvorrichtung und dem Kompensationsverstärkungssplitter oder zwischen der Empfangsverstärkungsvorrichtung und dem Kompensationsverstärkungscombiner ein der weiteren Detektorvorrichtung zugeordneter Empfangssignalkoppler angeordnet, über den ein Bruchteil des Empfangssignals der weiteren Detektorvorrichtung zuführbar ist.

Die weitere Detektorvorrichtung hat zweckmäßigerweise einen Empfangsdetektorverstärker, mittels dem der der weiteren Detektorvorrichtung zugeführte Bruchteil des Empfangssignals verstärkbar ist, einen abstimmbaren Bandpass, mittels dem der im Empfangsdetektorverstärker verstärkte Bruchteil des Empfangssignals abstimmbar bandbegrenzbar ist, und einen Breitbanddetektor, mittels dem der im abstimmbaren Bandpass bandbegrenzte Bruchteil des Empfangssignals in ein empfangssignalstärkenproportionales Gleichspannungssignal überführbar ist.

Zweckmäßigerweise ist im mobilfunkgeräteseitigen Kompensationsverstärkungscombiner das Ausgangssignal der Empfangsverstärkungsvorrichtung mit dem Sendesignal vereinbar, aus dem mittels eines Signalkopplers ein Bruchteil auskoppel- und der Detektorvorrichtung zuführbar ist.

Gemäß einer vorteilhaften Weiterbildung der erfindungsgemäßen Kompensationsverstärkungsschaltung ist mittels des Signalkopplers ein Bruchteil des Sendesignals aus demselben auskoppel- und einem abstimmbaren Bandpass der Detektorvorrichtung zuführbar, wobei der aus dem Sendesignal ausgekoppelte Bruchteil desselben im abstimmbaren Bandpass abstimmbar bandbegrenzbar und der im abstimmbaren Bandpass bandbegrenzte Bruchteil des Sendesignals in einem Breitbanddetektor der Detektorvorrichtung in ein sendesignalstärkenproportionales Gleichspannungssignal überführbar ist.

Vorteilhaft ist der Kompensationsverstärkungscombiner der Kompensationsverstärkungsschaltung an einen GNSS-Signalpfad angeschlossen, der an eine GNSS-Antenne angeschlossen ist und in dem ein abstimmbarer GNSS-Bandpass, in dem ein GNSS-Signal abgestimmt bandbegrenzbar ist, und eine GNSS-Empfangsverstärkungsvorrichtung angeordnet sind, in der das im abstimmbaren GNSS-Bandpass bandbegrenzte GNSS-Signal verstärkbar und von dem aus das verstärkte GNSS-Signal an den Kompensationsverstärkungscombiner weiterleitbar ist.

Bei dem erfindungsgemäßen Verfahren zum Betrieb einer bidirektionalen Kompensationsverstärkungsschaltung werden die zeitliche Abfolge und/oder die Frequenz eines Sendesignals eines Mobilfunkgeräts erfasst, auf der Grundlage der erfassten zeitlichen Abfolge und/oder Frequenz des Sendesignals des Mobilfunkgeräts ein aktueller Betriebszustand des Mobilfunkgeräts interpretiert und der Betriebszustand der Kompensationsverstärkungsschaltung entsprechend des interpretierten aktuellen Betriebszustands des Mobilfunkgeräts angepasst.

Gemäß einer Weiterbildung des erfindungsgemäßen Verfahrens wird die Intensität eines Sendesignals eines Mobilfunkgeräts über dessen Frequenz und/oder dessen Zeit aufgenommen und auf dieser Grundlage der aktuelle und/oder der auf den aktuellen folgende Betriebszustand des Mobilfunkgeräts ermittelt.

Vorteilhaft kann das erfindungsgemäße Verfahren so weitergebildet werden, dass in Empfangspausen das Empfangssignal breitbandig analysiert wird und die Übertragungscharakteristika eines Kompensationsverstärkungssplitters so verändert werden, dass sie optimal an zu erwartende Empfangsbedingungen angepasst werden.

Im Folgenden wird die Erfindung anhand von Ausführungsformen unter Bezugnahme auf die Zeichnung näher erläutert.

Es zeigen:
- Figur 1: eine Ausführungsform einer erfindungsgemäßen Kompensationsverstärkungsschaltung;
- Figur 2: eine weitere Ausführungsform der erfindungsgemäßen Kompensationsverstärkungsschaltung; und
- Figur 3: ein Flussdiagramm einer Ausführungsform eines mittels der erfindungsgemäßen Kompensationsverstärkungsschaltung realisierbaren Verfahrens zum Betrieb einer bidirektionalen Kompensationsverstärkungsschaltung.

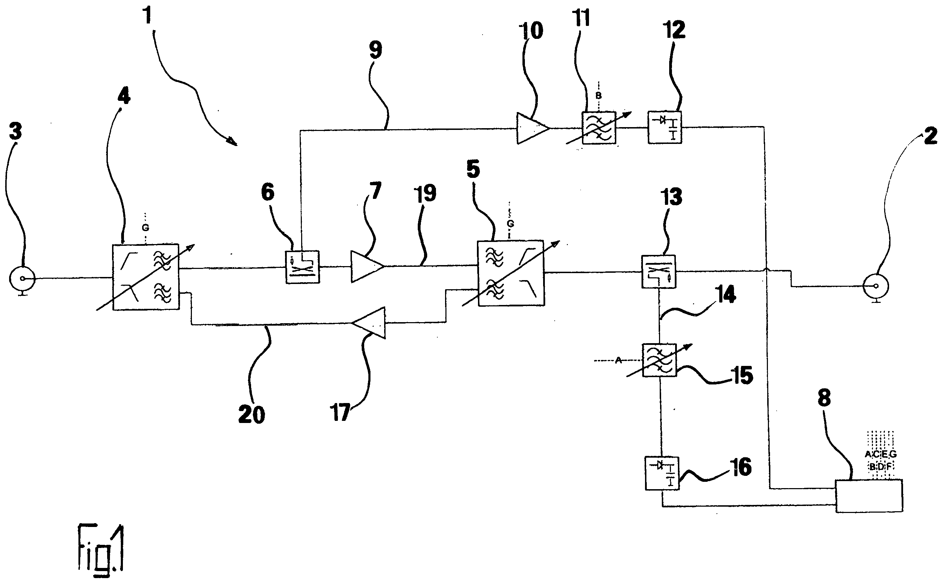

Eine in Figur 1 anhand einer ersten Ausführungsform gezeigte erfindungsgemäße Kompensationsverstärkungsschaltung 1 ist in eine Übertragungsleitung eingebaut, die zwischen einer in einem Kraftfahrzeug vorgesehenen Aufnahme 2 für ein Mobilfunkgerät und einer Antenne 3 des Kraftfahrzeugs vorgesehen ist. Die Antenne 3, bei der es sich beispielsweise um eine Außenantenne des Kraftfahrzeugs handeln kann, dient dem Anschluss der Kompensationsverstärkungsschaltung 1 bzw. eines in der kraftfahrzeugseitigen Aufnahme 2 befindlichen Mobilfunkgeräts an ein Mobilfunknetz, so dass Sende- und Empfangssignale mit dem Mobilfunknetz ausgetauscht werden können.

An die Antenne 3 ist ein antennenseitiger Kompensationsverstärkungssplitter 4 einer Selektionsvorrichtung 4, 5 angeschlossen, zu der neben dem antennenseitigen Kompensationsverstärkungssplitter 4 des Weiteren ein mobilfunkgeräteseitiger Kompensationsverstärkungscombiner 5 gehört.

Der antennenseitige Kompensationsverstärkungssplitter 4 der Selektionsvorrichtung 4, 5 nimmt eine Selektion bzw. eine Auswahl und Bandbreitenbegrenzung sowie eine Aufteilung des Sende- und des Empfangssignals vor. Das Übertragungsverhalten des antennenseitigen Kompensationsverstärkungssplitters 4 der Selektionsvorrichtung 4, 5 ist zwischen den Anschlussports des antennenseitigen Kompensationsverstärkungssplitters 4 abstimmbar. Die Art der Abstimmung wird vom aktuellen Empfangsfall, d.h. dem Betriebszustand des Mobilfunkgerätes (idle oder call), dem benutzten Frequenzband (GSM 900, GSM 1800, GSM 1900, GSM XYZ) und vom verwendeten Mobilfunkstandard (GSM, EDGE, UMTS, HPA, LTE, LTE-advanced) bestimmt.

Beispielsweise ist der Durchlassbereich des antennenseitigen Kompensationsverstärkungssplitters 4 von der Antenne 3 zu einem Empfangssignalkoppler 6 der Kompensationsverstärkungsschaltung 1 im idle-Betriebszustand des Mobilfunkgeräts, d.h., das Mobilfunkgerät ist in das Mobilfunknetz eingebucht und empfangsbereit, auf hohe Bandbreite abgestimmt; entsprechend ist eine breitbandige Verstärkung aller möglichen Empfangssignale realisierbar, um einen Gesprächsaufbau, einen Kanalwechsel und einen Standardwechsel des Mobilfunkgerätes uneingeschränkt vornehmen zu können.

Dagegen wird während eines lange laufenden Gesprächs oder einer lange laufenden Datenverbindung der Durchlassbereich des antennenseitigen Kompensationsverstärkungssplitters 4 von der Antenne 3 zum Empfangssignalkoppler 6 auf schmalbandig und das jeweilige Frequenzband eingestellt, so dass beispielsweise eine Abstimmung auf eine Bandfilterbandbreite realisiert wird. Dies geschieht mit dem Ziel, maximale Empfängerempfindlichkeit zu realisieren.

Des Weiteren ist es möglich, den Durchlassbereich des antennenseitigen Kompensationsverstärkungssplitters 4 von der Antenne 3 zum Empfangssignalkoppler 6 so einzustellen, dass der antennenseitige Kompensationsverstärkungssplitter 4 eine Bandsperre darstellt und bestimmte starke andere Signalfrequenzen außerhalb des gewünschten Empfangssignals unterdrückt. Hierdurch kann eine Übersteuerung nachfolgend angeordneter breitbandiger Empfangsverstärkungsvorrichtungen zuverlässig vermieden werden.

Das im antennenseitigen Kompensationsverstärkungssplitter 4 aufgeteilte Empfangssignal wird über den Empfangssignalkoppler 6 einer Empfangsverstärkungsvorrichtung 7 zugeführt. Die Empfangsverstärkungsvorrichtung 7 ist entweder breitbandig ausgeführt oder in ihrer Bandbreite mittels einer Auswertevorrichtung 8, deren Funktion im Folgenden noch beschrieben werden wird, initiiert abstimmbar.

Im Empfangssignalkoppler 6, über den das Empfangssignal der Empfangsverstärkungsvorrichtung 7 zugeführt wird, wird ein Signalpfad 9 ausgekoppelt, der einen Bruchteil des Empfangssignals enthält. In dem Signalpfad 9 ist eine Detektorvorrichtung 10, 11, 12 angeordnet. Zu dieser Detektorvorrichtung 10, 11, 12 gehört ein Empfangsdetektorverstärker 10, ein abstimmbarer Bandpass 11 und ein Breitbanddetektor 12.

Der mittels des Empfangssignalkopplers 6 in den Signalpfad 9 eingekoppelte Bruchteil des Empfangssignals wird im Empfangsdetektorverstärker 10 der Detektorvorrichtung 10, 11, 12 verstärkt; der im Empfangsdetektorverstärker 10 verstärkte Bruchteil des Empfangssignals wird im abstimmbaren Bandpass 11 der Detektorvorrichtung 10, 11, 12 abstimmbar bandbegrenzt und danach im Breitbanddetektor 12 der Detektorvorrichtung 10, 11, 12 in ein empfangssignalstärkenproportionales Gleichspannungssignal überführt.

Durch die Abstimmung des abstimmbaren Bandpasses 11 der Detektorvorrichtung 10, 11, 12 und die dazu synchrone Analyse der Leistung über die Zeit, die mittels des Breitbanddetektors 12 der Detektorvorrichtung 10, 11, 12 und der Auswertevorrichtung 8 realisiert wird, wird ein Abbild darüber gewonnen, welche Empfangssignale in welcher Höhe zu welchem Zeitpunkt vorliegen.

Die derart erhaltenen Informationen können dazu eingesetzt werden, um den aktuellen und ggf. einen darauf folgenden Betriebszustand des Mobilfunkgeräts zu interpretieren. Des Weiteren können diese Informationen dazu verwendet werden, um den Durchlassbereich des antennenseitigen Kompensationsverstärkungssplitters 4 von der kraftfahrzeugseitigen Antenne 3 zum Empfangssignalkoppler 6 hinsichtlich der Mittenfrequenz, der Bandbreite, der Selektion und der Bandsperren abzustimmen, wobei diese Informationen des Weiteren dazu einsetzbar sind, den Durchlassbereich des mobilfunkgeräteseitigen Kompensationsverstärkungscombiners 5 der Selektionsvorrichtung 4, 5 von der Empfangsverstärkungsvorrichtung 7 zu einem Signalkoppler 13, der zwischen dem mobilfunkgeräteseitigen Kompensationsverstärkungscombiner 5 und der kraftfahrzeugseitigen Aufnahme 2 angeordnet ist, hinsichtlich der Mittenfrequenz, der Bandbreite, der Selektion und der Bandsperren abzustimmen.

Das Ausgangssignal der Empfangsverstärkungsvorrichtung 7 wird im mobilfunkgeräteseitigen Kompensationsverstärkungscombiner 5 der Selektionsvorrichtung 4, 5 wieder mit dem Sendesignal vereint, bevor das dann wiedervereinte Signal über den Signalkoppler 13 zur kraftfahrzeugseitigen Aufnahme 2 des Mobilfunkgeräts geführt wird. Die kraftfahrzeugseitige Aufnahme 2 des Mobilfunkgeräts verfügt beispielsweise über einen breitbandigen elektromagnetischen Nahfeldkoppler, mittels dem das Empfangssignal an das Mobilfunkgerät übergeben wird.

In der Gegenrichtung wird ein vom Mobilfunkgerät ausgegebenes Sendesignal über den vorstehend erwähnten breitbandigen elektromagnetischen Nahfeldkoppler an die kraftfahrzeugseitige Aufnahme 2 weitergeleitet. An die kraftfahrzeugseitige Aufnahme 2 angeschlossen ist der Signalkoppler 13. Im Signalkoppler 13 wird ein Bruchteil des vom Mobilfunkgerät stammenden Sendesignals ausgekoppelt und in einen weiteren Signalpfad 14 eingeleitet. Dieser in den weiteren Signalpfad 14 eingeleitete Bruchteil des Sendesignals wird in einer im Signalpfad 14 vorgesehenen Detektorvorrichtung 15, 16 erfasst und verarbeitet. Hierzu weist die Detektorvorrichtung 15, 16 einen abstimmbaren Bandpass 15 und einen Breitbanddetektor 16 auf. Im abstimmbaren Bandpass 15 der Detektorvorrichtung 15, 16 wird der in den weiteren Signalpfad 14 eingekoppelte Bruchteil des Sendesignals abstimmbar bandbegrenzt. Der entsprechend bandbegrenzte Bruchteil des Sendesignals wird dann im Breitbanddetektor 16 der Detektorvorrichtung 15, 16 in ein sendesignalstärkenproportionales Gleichspannungssignal überführt.

Durch die Abstimmung des abstimmbaren Bandpasses 15 der Detektorvorrichtung 15, 16 und eine dazu synchrone Analyse der Leistung über die Zeit mittels des Breitbanddetektors 16 der Detektorvorrichtung 15, 16 und der Auswertevorrichtung 8 wird ein zutreffendes Abbild darüber gewonnen, welche Sendesignale in welcher Höhe zu welchem Zeitpunkt vorliegen.

Die derart gewonnenen Informationen dienen dazu, den aktuellen und einen darauf folgenden Betriebszustand des Mobilfunkgeräts zu interpretieren und entsprechend die Übertragungscharakteristika bzw. den Übertragungsfrequenzgang des mobilfunkgeräteseitigen Kompensationsverstärkungscombiners 5 vom Signalkoppler 13 zu einer zwischen dem antennenseitigen Kompensationsverstärkungssplitter 4 und dem mobilfunkgeräteseitigen Kompensationsverstärkungscombiner 5 angeordneten Sendeverstärkungsvorrichtung 17, des antennenseitigen Kompensationsverstärkungssplitters 4 von der Sendeverstärkungsvorrichtung 32 zur Antenne 3 des Kraftfahrzeugs, des antennenseitigen Kompensationsverstärkungssplitters 4 von der Antenne 2 des Kraftfahrzeugs zum Empfangssignalkoppler 6 und des mobilfunkgeräteseitigen Kompensationsverstärkungscombiners 5 von der Empfangsverstärkungsvorrichtung 7 zum Signalkoppler 13 abzustimmen.

Im mobilfunkgeräteseitigen Kompensationsverstärkungscombiner 5 der Selektionsvorrichtung 4, 5 erfolgt eine Aufteilung bzw. Zusammenführung des Sende- und des Empfangssignals. Vom mobilfunkgeräteseitigen Kompensationsverstärkungscombiner 5 wird das Sendesignal zur Sendeverstärkungsvorrichtung 17 geleitet, wo eine Nachverstärkung realisiert wird, bevor das verstärkte Sendesignal im antennenseitigen Kompensationsverstärkungssplitter 4 mit dem Empfangssignal zusammengefügt wird. Des Weiteren ist der antennenseitige Kompensationsverstärkungssplitter 4 der Selektionsvorrichtung 4, 5 derart ausgebildet, dass mittels ihm die Bandbreite des Sendesignals begrenzt bzw. maskiert werden kann.

Hierzu ist es hilfreich, wenn Informationen über den Sendefall, z.B. über das Band, und Kanalinformationen in der Auswertevorrichtung 8 vorab ermittelt wurden und damit vorliegen, damit mittels der Auswertevorrichtung 8 im antennenseitigen Kompensationsverstärkungssplitter 4 der Selektionsvorrichtung 4, 5 entsprechende Abstimmoperationen vorgenommen werden können. Hierdurch sollen breitbandiges Rauschen und/oder Mischprodukte vermieden bzw. unterdrückt werden, die z.B. in der Sendeverstärkungsvorrichtung 17 generiert wurden, in den Empfangszweig der Kompensationsverstärkungsschaltung 1 gelangen oder über die Antenne 3 des Kraftfahrzeugs und nachfolgende Antennen abgestrahlt werden. An dem mobilfunkgeräteseitigen Kompensationsverstärkungscombiner 5 werden entsprechende Abstimmoperationen vorgenommen, die ein Übersprechen des Sendesignals und dessen Intermodulationsprodukten bzw. breitbandigen Rauschanteiles vom gemeinsamen Signalpfad zwischen der kraftfahrzeugseitigen Aufnahme 2 und dem Kompensationsverstärkungscombiner 5 in den Empfangspfad 19 verhindern.

Die Auswertevorrichtung 8 ist über eine Steuerleitung A mit dem abstimmbaren Bandpass 15 der Detektorvorrichtung 15, 16, über eine Steuerleitung G mit dem mobilfunkgeräteseitigen Kompensationsverstärkungscombiner 5 der Selektionsvorrichtung 4, 5, über die Steuerleitung G mit dem antennenseitigen Kompensationsverstärkungssplitter 4 der Selektionsvorrichtung 4, 5 und über eine Steuerleitung B mit dem abstimmbaren Bandpass 11 der Detektorvorrichtung 10, 11, 12 verbunden. Hierdurch kann auf den jeweiligen Betriebsfall, den Empfangs- bzw. den Sendefall, des Mobilfunkgeräts eingegangen werden.

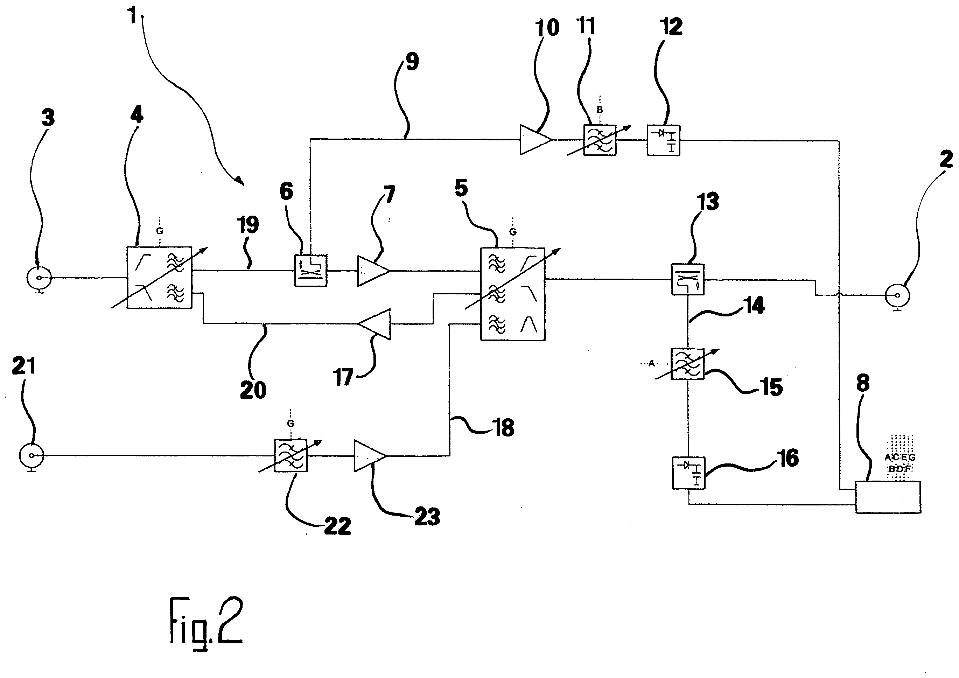

Im Falle der in Figur 2 gezeigten Ausführungsform der erfindungsgemäßen Kompensationsverstärkungsschaltung 1 weist diese zusätzlich einen GNSS-Empfangs- bzw. Signalpfad 18 auf. Dieser GNSS-Empfangs- bzw. Signalpfad 18 wird mittels des mobilfunkgeräteseitigen Kompensationsverstärkungscombiners 5 der Selektionsvorrichtung 4, 5 mit den beiden zellularen Signalpfaden 19, 20 kombiniert, die zwischen dem antennenseitigen Kompensationsverstärkungssplitter 4 und dem mobilfunkgeräteseitigen Kompensationsverstärkungscombiner 5 der Selektionsvorrichtung 4, 5 verlaufen und in denen die Empfangsverstärkungsvorrichtung 7 bzw. die Sendeverstärkungsvorrichtung 17 angeordnet sind. Im GNSS-Empfangs- bzw. Signalpfad 18, mittels dem der mobilfunkgeräteseitige Kompensationsverstärkungscombiner 5 an eine GNSS-Antenne 21 angeschlossen ist, sind ein abstimmbarer GNSS-Bandpass 22 und eine GNSS-Empfangsverstärkungsvorrichtung 23 vorgesehen.

Im abstimmbaren GNSS-Bandpass 22 wird ein durch die GNSS-Antenne 21 in den GNSS-Empfangs- bzw. Signalpfad 18 eingeleitetes Signal bandbegrenzt, so dass eine Übersteuerung der auf den GNSS-Bandpass 22 nachfolgenden GNSS-Empfangsverstärkungsvorrichtung verhindert wird. Die Abstimmbarkeit des GNSS-Bandpass 22 gewährleistet, dass eine Anpassung an das jeweils unterstützte GNSS-System und an den Betriebszustand des Mobilfunkgeräts vorgenommen werden kann.

In einer Abwandlung zu den vorstehend beschriebenen Ausführungsformen können die den abstimmbaren Bandpass 15 und den Breitbanddetektor 16 aufweisende Detektorvorrichtung 15, 16 und die den Empfangsdetektorverstärker 10, den abstimmbaren Bandpass 11 und den Breitbanddetektor 12 aufweisende weitere Detektorvorrichtung 10, 11, 12 auch als Empfängerarchitekturen ausgestaltet sein, z.B. als schnell abstimmende Supernet-oder Zero-IF-Empfängerarchitektur.

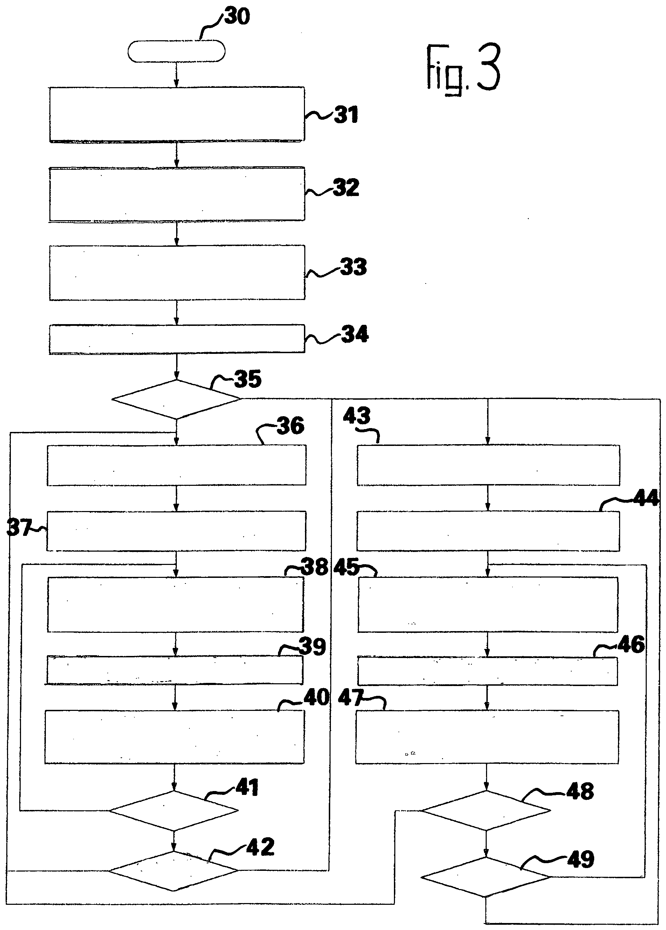

Aus dem in Figur 3 dargestellten Flussdiagramm geht eine Ausführungsform für das in der erfindungsgemäßen bidirektionalen Kompensationsverstärkungsschaltung 1 realisierte Verfahren hervor. Nach dem Start 30 der anhand von Figur 3 erläuterten Ausführungsform des erfindungsgemäßen Verfahrens zum Betrieb der bidirektionalen Kompensationsverstärkungsschaltung 1 werden in einem Verfahrensschritt 31 der zellulare Signal- bzw. Sendepfad 20, in dem der mobilfunkgeräteseitige Kompensationsverstärkungscombiner 5, die Sendeverstärkungsvorrichtung 17 und der antennenseitige Kompensationsverstärkungssplitter 4 angeordnet sind, und der zellulare Signal- bzw. Empfangspfad 19, in dem der antennenseitige Kompensationsverstärkungssplitter 4, die Empfangsverstärkungsvorrichtung 7 und der mobilfunkgeräteseitige Kompensationsverstärkungscombiner 5 angeordnet sind, auf maximale Breitbandigkeit und Universalität eingestellt.

In dem darauf folgenden Verfahrensschritt 32 wird über eine mittels des Empfangssignalkopplers 6 und der den Empfangsverstärker 10, den abstimmbaren Bandpass 11 und den Breitbanddetektor 12 aufweisenden Detektorvorrichtung 10, 11, 12 eine breitbandige Empfangssignalabschätzung vorgenommen und die Empfangssignallandschaft abgeschätzt, wobei der abstimmbare Bandpass 11 schnell durchgestimmt und das Ausgangssignal des Breitbanddetektors 12 interpretiert wird, so dass mittels des Empfangspfads 19 im antennenseitigen Kompensationsverstärkungssplitter 4 unerwünschte Blockingsignale außerhalb der relevanten Mobilfunkempfangsbänder unterdrückt werden können.

Im Verfahrensschritt 33 wird die Aktivität eines Senders des Mobilfunkgeräts mittels des Signalkopplers 13 und der den abstimmbaren Bandpass 15 und den Breitbanddetektor 16 aufweisenden Detektorvorrichtung 15, 16 überwacht. Dabei wird der abstimmbare Bandpass 15 so schnell über die relevanten senderseitigen Mobilfunkfrequenzbänder abgestimmt, dass sich mittels der Ablaufsteuerung und dem Ausgangssignal des Breitbanddetektors 16 eine Matrix der detektierten Sendeleistung über Frequenz und über die Zeit anlegen lässt.

In dem darauf folgenden Verfahrensschritt 34 wird aus dieser Matrix der Betriebszustand und das Betriebsfrequenzband des Mobilfunkgeräts interpretiert.

Im darauf folgenden Verfahrensschritt 35 wird entschieden, ob sich das Mobilfunkgerät im idle-Betriebszustand, in dem das Mobilfunkgerät in das Mobilfunknetz eingebucht und empfangsbereit ist, oder im laufenden Gesprächs-Betriebszustand ist.

Wenn sich das Mobilfunkgerät im idle-Betriebszustand befindet, wird im darauf folgenden Verfahrensschritt 36 eine optimierte Einstellung des Empfangspfads für das eingebuchte Netzwerk und die Frequenzbänder vorgenommen, auf denen Empfang zu erwarten ist.

Im darauf folgenden Verfahrensschritt 37 erfolgt eine optimierte Einstellung des Sendepfads für das eingebuchte Netzwerk und die Frequenzbänder, auf denen Sendesignale zur Signalisierung zu erwarten sind.

Im darauf folgenden Verfahrensschritt 38 wird die Aktivität des Senders des Mobilfunkgeräts mittels des Signalkopplers 13 des abstimmbaren Bandpasses 15 und des Breitbanddetektors 16 der Detektorvorrichtung 15,. 16 überwacht, wobei der abstimmbare Bandpass 15 so schnell über die relevanten senderseitigen Mobilfunkfrequenzbänder abgestimmt wird, dass sich mittels der Ablaufsteuerung und dem Ausgangssignal des Breitbanddetektors 16 eine Matrix der detektierten Sendeleistung über die Frequenz und über die Zeit anlegen lässt.

Darauf folgend wird im Verfahrensschritt 39 aus der im Verfahrensschritt 38 angelegten Matrix der Betriebszustand und das Betriebsfrequenzband des Mobilfunkgeräts interpretiert, wobei insbesondere mit einem Zellwechsel bzw. Frequenzbandwechsel oder mit einer Gesprächsaufnahme gerechnet wird.

Im darauf folgenden Verfahrensschritt 40 wird in den Empfangspausen mittels der breitbandigen Empfangssignalabschätzung und der Veränderung des Übertragungsverhaltens des antennenseitigen Kompensationsverstärkungssplitters 4 der Selektionsvorrichtung 4, 5 optimal auf die zu erwartenden Empfangsbedingungen vorbereitet; beispielsweise werden unerwünschte und schädliche empfangbare Signale unterdrückt.

Im darauf folgenden Verfahrensschritt 41 wird festgestellt, ob eine Sendeaktivität vorliegt oder nicht. Liegt keine Sendeaktivität vor, wird das Verfahren vom Verfahrensschritt 41 zurück zum Verfahrensschritt 38 geführt. Liegt eine Sendeaktivität vor, wird in dem darauf folgenden Verfahrensschritt 42 entschieden, ob eine Gesprächsaufnahme erfolgt oder nicht. Erfolgt keine Gesprächsaufnahme, gerät das Verfahren zurück zum Verfahrensschritt 36. Liegt eine Gesprächsaufnahme vor, wird in den Verfahrensschritt 43 übergegangen. Sofern im Verfahrensschritt 35 entschieden wird, dass das Mobilfunkgerät sich in seinem Gesprächs-Betriebszustand befindet, gerät das Verfahren vom Verfahrensschritt 35 unmittelbar in den vorstehend bereits erwähnten Verfahrensschritt 43, in dem eine optimierte Einstellung des Empfangspfades für das für das Gespräch benutzte Netzwerk und Frequenzband vorgenommen wird.

Darauf folgend wird in einem Verfahrensschritt 44 eine optimierte Einstellung des Sendepfades für das für das Gespräch benutzte Netzwerk und Frequenzband vorgenommen.

Im darauf folgenden Verfahrensschritt 45 wird die Aktivität des Senders des Mobilfunkgeräts mittels des Signalkopplers 13 und dem abstimmbaren Bandpass 15 sowie dem Breitbanddetektor 16 der Detektorvorrichtung 15, 16 überwacht, wobei der abstimmbare Bandpass 15 so schnell über die relevanten senderseitigen Mobilfunkfrequenzbänder abgestimmt wird, dass sich mittels der Ablaufsteuerung und dem Ausgangssignal des Breitbanddetektors 16 eine Matrix der detektierten Sendeleistung über die Frequenz und über die Zeit anlegen lässt.

Im darauf folgenden Verfahrensschritt 46 wird aus der im Verfahrensschritt 45 angelegten Matrix der Betriebszustand und das Betriebsfrequenzband des Mobilfunkgeräts interpretiert, wobei besonders mit einem Zellwechsel bzw. Frequenzbandwechsel oder mit einem Gesprächsabbau gerechnet wird.

Darauf folgt der Verfahrensschritt 47, bei dem in den Empfangspausen mittels der breitbandigen Empfangssignalabschätzung und der Veränderung des Übertragungsverhaltens des antennenseitigen Kompensationsverstärkungssplitters 4 der Selektionsvorrichtung 4, 5 optimal auf die zu erwartenden Empfangsbedingungen eingegangen wird; z.B. werden unerwünschte und schädliche empfangbare Signale unterdrückt.

Im darauf folgenden Verfahrensschritt 48 wird entschieden, ob ein Gesprächsabbau vorliegt oder nicht. Sofern ein Gesprächsabbau vorliegt, gerät das Verfahren aus dem Verfahrensschritt 48 entweder zurück zu dem Verfahrensschritt 36 oder zurück zum Verfahrensschritt 42.

Wird im Verfahrensschritt 48 entschieden, dass kein Gesprächsabbau vorliegt, gerät das Verfahren in den Verfahrensschritt 49, in dem entschieden wird, ob ein Zellwechsel bzw. ein Frequenzbandwechsel vorliegt. Liegt kein Zellwechsel bzw. kein Frequenzbandwechsel vor, gerät das Verfahren zurück zum Verfahrensschritt 45. Liegt ein Zellwechsel bzw. Frequenzbandwechsel vor, gerät das Verfahren entweder zurück zum Verfahrensschritt 35 oder zum Verfahrensschritt 43.

## Patentansprüche

1. Kompensationsverstärkungsschaltung zum Einbau in eine Übertragungsleitung zwischen einem in einem Kraftfahrzeug befindlichen Mobilfunkgerät bzw. einer kraftfahrzeugseitigen Aufnahme (2) für das Mobilfunkgerät einerseits und einer Antenne (3) des Kraftfahrzeugs andererseits, mit einer Empfangsverstärkungsvorrichtung (7), mittels der ein über die Antenne (3) des Kraftfahrzeugs empfangenes und durch die Übertragungsleitung dem Mobilfunkgerät zuzuführendes Empfangssignal verstärkbar ist, einer Sendeverstärkungsvorrichtung (17), mittels der ein vom Mobilfunkgerät abgesendetes und durch die Übertragungsleitung der Antenne (2) des Kraftfahrzeugs zuzuführendes Sendesignal verstärkbar ist, einer Detektorvorrichtung (15, 16), mittels der ein Betriebszustand des im Kraftfahrzeug befindlichen Mobilfunkgeräts detektier-und zu einem Detektorsignal verarbeitbar ist, einer Selektionsvorrichtung (4, 5), mittels der der Betriebszustand der Kompensationsverstärkungsschaltung (1) an den Betriebszustand des im Kraftfahrzeug befindlichen Mobilfunkgeräts anpassbar ist, und einer Auswertevorrichtung (8), mittels der das Detektorsignal erfassbar und mittels der die Selektionsvorrichtung (4, 5) in Abhängigkeit vom Detektorsignal beeinflussbar ist, **dadurch gekennzeichnet, dass** die Selektionsvorrichtung (4, 5) Filter mit anpassbaren Übertragungscharakteristiken aufweist und dass die Übertragungscharakteristiken der Filter mittels der Auswertevorrichtung (8) entsprechend dem Detektorsignal einstellbar sind.

2. Kompensationsverstärkungsschaltung nach Anspruch 1, mit einer weiteren Detektorvorrichtung (10, 11, 12), mittels der Parameter des Empfangssignals detektier- und zu einem weiteren Detektorsignal verarbeitbar sind, wobei mittels der Auswertevorrichtung (8) das weitere Detektorsignal erfaßbar und die Selektionsvorrichtung (4, 5) in Abhängigkeit vom weiteren Detektorsignal beeinflussbar ist, und wobei die Übertragungscharakteristiken der Filter der Selektionsvorrichtung (4, 5) mittels der Auswertevorrichtung (8) entsprechend dem weiteren Detektorsignal einstellbar sind.

3. Kompensationsverstärkungsschaltung nach Anspruch 2, bei der das von Parametern in einem Empfangspfad der Kompensationsverstärkungsschaltung (1) abhängige weitere Detektorsignal mit der Auswertevorrichtung (8) zur Beeinflussung eines mit der Übertragungscharakteristik der Sendeverstärkungsvorrichtung (17) versehenen Sendepfads der Kompensationsverstärkungsschaltung (1) berücksichtigbar ist.

4. Kompensationsverstärkungsschaltung nach einem der Ansprüche 1 bis 3, bei der zu der Selektionsvorrichtung (4, 5) ein antennenseitiger Kompensationsverstärkungssplitter (4) gehört, mittels dem eine Auswahl, eine Bandbreitenbegrenzung und eine Aufteilung des Sende- und des Empfangssignals realisierbar ist und dessen Übertragungscharakteristik zwischen seinen Anschlussports abstimmbar ist.

5. Kompensationsverstärkungsschaltung nach einem der Ansprüche 1 bis 4, bei der zu der Selektionsvorrichtung (4, 5) ein mobilfunkgeräteseitiger Kompensationsverstärkungscombiner (5) gehört, mittels dem eine Auswahl, eine Bandbreitenbegrenzung und eine Zusammenführung des Sende- und des Empfangssignals realisierbar ist und dessen Übertragungscharakteristik zwischen seinen Anschlussports abstimmbar ist.

6. Kompensationsverstärkungsschaltung nach einem der Ansprüche 1 bis 5, deren Empfangsverstärkungsvorrichtung (7) breitbandig ausgeführt und in ihrer Bandbreite mittels der Auswertevorrichtung (8) initiiert abstimmbar ist.

7. Kompensationsverstärkungsschaltung nach einem der Ansprüche 3 bis 6, bei der zwischen der Empfangsverstärkungsvorrichtung (7) und dem Kompensationsverstärkungssplitter (4) oder zwischen der Empfangsverstärkungsvorrichtung (7)und dem Kompensationsverstärkungscombiner (5) ein der weiteren Detektorvorrichtung (10, 11, 12) zugeordneter Empfangssignalkoppler (6) angeordnet ist, über den ein Bruchteil des Empfangssignals der weiteren Detektorvorrichtung (10, 11, 12) zuführbar ist.

8. Kompensationsverstärkungsschaltung nach Anspruch 7, deren weitere Detektorvorrichtung (10, 11, 12) einen Empfangsdetektorverstärker (10), mittels dem der der weiteren Detektorvorrichtung (10, 11, 12) zugeführte Bruchteil des Empfangssignals verstärkbar ist, einen abstimmbaren Bandpass (11), mittels dem der im Empfangsdetektorverstärker (10) verstärkte Bruchteil des Empfangssignals abstimmbar bandbegrenzbar ist, und einen Breitbanddetektor (12) aufweist, mittels dem der im abstimmbaren Bandpass (11) bandbegrenzte Bruchteil des Empfangssignals in ein empfangssignalstärkenproportionales Gleichspannungssignal überführbar ist.

9. Kompensationsverstärkungsschaltung nach einem der Ansprüche 5 bis 8, bei der im mobilfunkgerätseitigen Kompensationsverstärkungscombiner (5) das Ausgangssignal der Empfangsverstärkungsvorrichtung (7) mit dem Sendesignal vereinbar ist, aus dem mittels eines Signalkopplers (13) ein Bruchteil auskoppel- und der Detektorvorrichtung (15, 16) zuführbar ist.

10. Kompensationsverstärkungsschaltung nach Anspruch 9, bei der mittels des Signalkopplers (13) ein Bruchteil des Sendesignals aus demselben auskoppel- und einem abstimmbaren Bandpass (15) der Detektorvorrichtung (15, 16) zuführbar ist, wobei der aus dem Sendesignal ausgekoppelte Bruchteil desselben im abstimmbaren Bandpass (15) abstimmbar bandbegrenzbar und der im abstimmbaren Bandpass (15) bandbegrenzte Bruchteil des Sendesignals in einem Breitbanddetektor (16) der Detektorvorrichtung (15, 16) in ein sendesignalstärkenproportionales Gleichspannungssignal überführbar ist.

11. Kompensationsverstärkungsschaltung nach Anspruch 9 oder 10, deren Kompensationsverstärkungscombiner (5) an einen GNSS-Signalpfad (18) angeschlossen ist, der an eine GNSS-Antenne (21) angeschlossen und in dem ein abstimmbarer GNSS-Bandpass (22), in dem ein GNSS-Signal abgestimmt bandbegrenzbar ist, und eine GNSS-Empfangsverstärkungsvorrichtung (23) angeordnet sind, in der das im abstimmbaren GNSS-Bandpass (22) bandbegrenzte GNSS-Signal verstärkbar und von dem das verstärkte GNSS-Signal an den Kompensationsverstärkercombiner (5) weiterleitbar ist.

12. Verfahren zum Betrieb einer bidirektionalen Kompensationsverstärkungsschaltung (1) nach einem der Ansprüche 1 bis 11, bei dem die zeitliche Abfolge und/oder die Frequenz eines Sendesignals eines Mobilfunkgeräts erfaßt werden, auf der Grundlage der erfassten zeitlichen Abfolge und/oder Frequenz des Sendesignals des Mobilfunkgeräts ein aktueller Betriebszustand des Mobilfunkgeräts interpretiert wird, und der Betriebszustand der Kompensationsverstärkungsschaltung (1) entsprechend dem interpretierten aktuellen Betriebszustand des Mobilfunkgeräts angepasst wird.

13. Verfahren zum Betrieb einer bidirektionalen Kompensationsverstärkungsschaltung (1) nach einem der Ansprüche 1 bis 11 bzw. nach Anspruch 12, bei dem die Intensität eines Sendesignals eines Mobilfunkgeräts über dessen Frequenz und/oder dessen Zeit aufgenommen wird und auf dieser Grundlage der aktuelle und/oder der auf den aktuellen folgende Betriebszustand des Mobilfunkgeräts ermittelt wird.

14. Verfahren zum Betrieb einer bidirektionalen Kompensationsverstärkungsschaltung (1) nach einem der Ansprüche 4 bis 11 bzw. nach Anspruch 12 oder 13, bei dem in Empfangspausen das Empfangssignal breitbandig analysiert wird und die Übertragungscharakteristika eines Kompensationsverstärkungssplitters (4) so verändert werden, dass sie optimal an zu erwartende Empfangsbedingungen angepasst werden.

## Claims

1. A compensated amplification circuit for installation in a transmission line between a mobile radio unit in a motor vehicle or a receiving means at the motor vehicle end (2) for the mobile radio unit, on the one hand, and an antenna (3) of the motor vehicle, on the other, having a reception amplification device (7), by means of which a reception signal received via the antenna (3) of the motor vehicle and supplied by the transmission line to the mobile radio unit can be amplified, a transmission amplification device (17) by means of which a transmission signal transmitted by the mobile radio unit and supplied by the transmission line to the antenna (3) of the motor vehicle can be amplified, a detector device (15, 16) by means of which an operating state of the mobile radio unit located in the motor vehicle can be detected and processed into a detector signal, a selection device (4, 5) by means of which the operating state of the compensated amplification circuit (1) can be adapted to the operating state of the mobile radio unit located in the motor vehicle and an evaluation device (8) by means of which the detector signal can be detected and by means of which the selection device (4, 5) can be influenced depending on the detector signal, **characterized in that** the selection device (4, 5) has filters with adaptable transmission characteristics and the transmission characteristics of the filters are correspondingly adjustable according to the detector signal by means of the evaluation device (8).

2. The compensated amplification circuit according to claim 1, having a further detector device (10, 11, 12) by means of which parameters of the reception signal can be detected and processed into another detector signal, wherein by means of the evaluation device (8), the other detector signal can be detected and the selection device (4, 5) can be influenced depending on the other detector signal and wherein the transmission characteristics of the filters of the selection device (4, 5) can be adapted accordingly to the other detector signal by means of the evaluation device (8).

3. The compensated amplification circuit according to claim 2, wherein the other detector signal which depends on parameters in a reception path of the compensated amplification circuit (1) can be taken into account using the evaluation device (8) in order to influence a transmission path of the compensated amplification circuit (1) provided with the transmission characteristics of the transmission amplification device (17).

4. The compensated amplification circuit according to one of claims 1 to 3, wherein a compensated amplification splitter (4) on the antenna side is included in the selection device (4, 5), by means of which a selection, a bandwidth limitation and a splitting of the transmission and reception signal can be undertaken and the transmission characteristics whereof can be tuned between its connection ports.

5. The compensated amplification circuit according to one of claims 1 to 4, wherein the selection device (4, 5) includes a compensated amplification combiner (5) at the mobile radio unit end, by means of which a selection, a bandwidth limitation and a combination of the transmission and reception signal can be undertaken and the transmission characteristics thereof can be tuned between its connection ports.

6. The compensated amplification circuit according to one of claims 1 to 5, the reception amplification device (7) whereof is broadband in design and can be tuned in an initialized manner by means of the evaluation device (8).

7. The compensated amplification circuit according to one of claims 3 to 6, wherein between the reception amplification device (7) and the compensated amplification splitter (4) or between the reception amplification device (7) and the compensation amplification combiner (5) a reception signal coupler (6) assigned to the other detector device (10, 11, 12) is arranged, via which a fraction of the reception signal can be supplied to the other detector device (10, 11, 12).

8. The compensated amplification circuit according to claim 7, the other detector device (10, 11, 12) whereof is a reception detector amplifier (10) by means of which the fraction of the reception signal supplied to the other detector device (10, 11, 12) can be amplified, a tunable bandpass (11) by means of which the fraction of the reception signal amplified in the reception detector amplifier (10) can be tuned in a bandwidth-limiting manner and a bandwidth detector (12), by means of which the fraction of the reception signal band-limited in the tunable bandpass (11) can be converted into a DC voltage signal proportional to the reception signal strength.

9. The compensated amplification circuit according to one of claims 5 to 8, wherein the output signal of the reception amplification device (7) can be combined with the transmission signal in the compensated amplification combiner (5) at the mobile radio unit end, from which transmission signal a fraction can be uncoupled by means of a signal coupler (13) and fed to the detector device (15, 16).

10. The compensated amplification circuit according to claim 9, wherein by means of the signal coupler (13) a fraction of the transmission signal can be uncoupled from the same and supplied to a tunable bandpass (15) of the detector device (15, 16), wherein the fraction of the same uncoupled from the transmission signal can be bandwidth-limited in a tunable manner in the tunable bandpass (15) and the fraction of the transmission signal bandwidth-limited in the tunable bandpass (15) can be converted in a bandwidth detector (16) of the detector device (15, 16) into a DC voltage signal proportional to the transmission signal strength.

11. The compensated amplification circuit according to claim 9 or 10, the compensated amplification combiner (5) whereof is attached to a GNSS signal path (18) which is attached to a GNSS antenna (21) and in which a tunable GNSS bandpass (22), in which a GNSS signal is bandwidth-limited in a tunable manner and a GNSS reception amplification device (23) are arranged, in which the GNSS signal bandwidth-limited in the tunable GNSS bandpass (22) can be amplified and from which the amplified GNSS signal can be transmitted to the compensated amplifier combiner (5).

12. A method of operating a bidirectional compensated amplification circuit (1) according to one of claims 1 to 11, wherein the temporal sequence and/or the frequency of a transmission signal of a mobile radio unit are detected, on the basis of the detected temporal sequence and/or frequency of the transmission signal of the mobile radio unit, a current operating state of the mobile radio unit is interpreted and the operating state of the compensated amplification circuit (1) is correspondingly adapted to the interpreted current operating state of the mobile radio unit.

13. The method of operating a bidirectional compensated amplification circuit (1) according to one of claims 1 to 11 or according to claim 12, wherein the intensity of a transmission signal of a mobile radio unit is recorded via the frequency and/or the time thereof and on this basis the current operating state and/or the operating state of the mobile radio unit following the current operating state is determined.

14. The method of operating a bidirectional compensated amplification circuit (1) according to one of claims 4 to 11 or according to claim 12 or 13, wherein in reception breaks the reception signal undergoes broadband analysis and the transmission characteristics of a compensated amplification splitter (4) are changed in such a manner that they are optimally adapted to the anticipated reception conditions.

## Revendications

1. Circuit d'amplification de compensation pour l'intégration dans une ligne de transmission entre un appareil radio mobile se trouvant dans un véhicule automobile ou dans un logement (2) côté véhicule automobile pour l'appareil radio mobile d'une part, et une antenne (3) du véhicule automobile d'autre part, avec un dispositif d'amplification de réception (7) au moyen duquel il est possible d'amplifier un signal de réception réceptionné via l'antenne (3) du véhicule automobile et l'amener à l'appareil radio mobile via la ligne de transmission, un dispositif d'amplification d'émission (17) au moyen duquel il est possible d'amplifier un signal d'émission émis par l'appareil radio mobile et à amener via la ligne de transmission de l'antenne (3) du véhicule automobile, un dispositif de détection (15, 16) au moyen duquel un état de fonctionnement de l'appareil radio mobile se trouvant dans le véhicule automobile est détecté et est transformé en un signal de détection, un dispositif de sélection (4, 5) au moyen duquel il est possible d'adapter l'état de fonctionnement du circuit d'amplification de compensation (1) à l'état de fonctionnement de l'appareil radio mobile se trouvant dans le véhicule automobile, et un dispositif d'évaluation (8) au moyen duquel le signal de détection peut être détecté et au moyen duquel le dispositif de sélection (4, 5) peut être influencé en fonction du signal de détection, **caractérisé en ce que** le dispositif de sélection (4, 5) présente des filtres avec des caractéristiques de transmission adaptables et que les caractéristiques de transmission des filtres sont réglables au moyen du dispositif d'évaluation (8) conformément au signal de détection.

2. Circuit d'amplification de compensation selon la revendication 1, avec un autre dispositif de détection (10, 11, 12) au moyen duquel des paramètres du signal de réception sont détectés et transformés en un autre signal de détection, dans lequel, au moyen du dispositif d'évaluation (8), l'autre signal de détection peut être détecté et le dispositif de sélection (4, 5) peut être influencé en fonction de l'autre signal de détection, et dans lequel les caractéristiques de transmission des filtres du dispositif de sélection (4, 5) sont réglables au moyen du dispositif d'évaluation (8) conformément à l'autre signal de détection.

3. Circuit d'amplification de compensation selon la revendication 2, dans lequel l'autre signal de détection dépendant de paramètres dans un chemin de réception du circuit d'amplification de compensation (1) peut être pris en compte avec le dispositif d'évaluation (8) pour influencer un chemin d'émission doté de la caractéristique de transmission du dispositif d'amplification d'émission (17) du circuit d'amplification de compensation (1).

4. Circuit d'amplification de compensation selon l'une des revendications 1 à 3, dans lequel un répartiteur d'amplification de compensation (4) côté antenne fait partie du dispositif de sélection (4, 5), au moyen duquel répartiteur il est possible de réaliser une sélection, une limitation de largeur de bande et une séparation du signal d'émission et de réception et dont la caractéristique de transmission est syntonisable entre ses ports de connexion.

5. Circuit d'amplification de compensation selon l'une des revendications 1 à 4, dans lequel un combinateur d'amplification de compensation (5) côté appareil radio mobile fait partie du dispositif de sélection (4, 5), au moyen duquel combinateur il est possible de réaliser une sélection, une limitation de largeur de bande et un regroupement du signal d'émission et de réception et dont la caractéristique de transmission est syntonisable entre ses ports de connexion.

6. Circuit d'amplification de compensation selon l'une des revendications 1 à 5, dont le dispositif d'amplification de réception (7) est réalisé à large bande et peut être syntonisé de manière initiée concernant sa largeur bande au moyen du dispositif d'évaluation (8).

7. Circuit d'amplification de compensation selon l'une des revendications 3 à 6, dans lequel, entre le dispositif d'amplification de réception (7) et le répartiteur d'amplification de compensation (4) ou entre le dispositif d'amplification de réception (7) et le combinateur d'amplification de compensation (5), un coupleur de signal de réception (6) associé à l'autre dispositif de détection (10, 11, 12) est disposé, par l'intermédiaire duquel il est possible d'amener une fraction du signal de réception à l'autre dispositif de détection (10, 11, 12).

8. Circuit d'amplification de compensation selon la revendication 7, dont l'autre dispositif de détection (10, 11, 12) présente un amplificateur de détection de réception (10) au moyen duquel la fraction du signal de réception amenée à l'autre dispositif de détection (10, 11, 12) peut être amplifiée, un filtre passe-bande (11) syntonisable au moyen duquel la fraction du signal de réception amplifiée dans l'amplificateur de détection de réception (10) peut être limitée en bande de façon syntonisable, et un détecteur large bande (12) au moyen duquel la fraction du signal de réception limitée en bande dans la filtre passe-bande (11) syntonisable peut être convertie en un signal de tension continue proportionnel à l'intensité du signal de réception.

9. Circuit d'amplification de compensation selon l'une des revendications 5 à 8, dans lequel, dans le combinateur d'amplification de compensation (5) côté appareil radio mobile, le signal de sortie du dispositif d'amplification de réception (7) peut être réuni avec le signal d'émission, à partir duquel, au moyen d'un coupleur de signaux (13), une fraction peut être découplée et amenée au dispositif de détection (15, 16).

10. Circuit d'amplification de compensation selon la revendication 9, dans lequel, au moyen du coupleur de signaux (13), une fraction du signal d'émission peut être découplée de ce même et être amenée à un filtre passe-bande (15) syntonisable du dispositif de détection (15, 16), dans lequel la fraction découplée du signal d'émission de ce même peut être limitée en bande de façon syntonisable dans le filtre passe-bande (15) syntonisable, et la fraction du signal d'émission limitée en bande dans le filtre passe-bande (15) syntonisable peut être convertie dans un détecteur large bande (16) du dispositif de détection (15, 16) en un signal de tension continue proportionnel à l'intensité du signal d'émission.

11. Circuit d'amplification de compensation selon la revendication 9 ou 10, dont le combinateur d'amplification de compensation (5) est raccordé à un chemin de signal GNSS (18), lequel est raccordé à une antenne GNSS (21) et dans lequel un filtre passe-bande GNSS (22) syntonisable, dans lequel un signal GNSS peut être limité en bande de manière syntonisée, et un dispositif d'amplification de réception GNSS (23) sont disposés, dans lequel le signal GNSS limité en bande dans le filtre passe-bande GNSS (22) syntonisable peut être amplifié et dont le signal GNSS amplifié peut être retransmis au combinateur d'amplification de compensation (5).

12. Procédé pour faire fonctionner un circuit d'amplification de compensation bidirectionnel (1) selon l'une des revendications 1 à 11, dans lequel la séquence temporelle et/ou la fréquence d'un signal d'émission d'un appareil radio mobile sont détectées, sur la base de la séquence temporelle et/ou fréquence détectée(s) du signal d'émission de l'appareil radio mobile, un état de fonctionnement actuel de l'appareil radio mobile est interprété, et l'état de fonctionnement du circuit d'amplification de compensation (1) est adapté conformément à l'état de fonctionnement actuel interprété de l'appareil radio mobile.

13. Procédé pour faire fonctionner un circuit d'amplification de compensation bidirectionnel (1) selon l'une des revendications 1 à 11 ou la revendication 12, dans lequel l'intensité d'un signal d'émission d'un appareil radio mobile est enregistrée via la fréquence et/ou le temps de celui-ci et sur cette base, l'état de fonctionnement actuel et/ou celui suivant l'actuel de l'appareil radio mobile est déterminé.

14. Procédé pour faire fonctionner un circuit d'amplification de compensation bidirectionnel (1) selon l'une des revendications 4 à 11 ou la revendication 12 ou 13, dans lequel, dans des pauses de réception, le signal de réception est analysé de façon large bande et les caractéristiques de transmission d'un répartiteur d'amplification de compensation (4) sont modifiées de façon telle, qu'elles sont adaptées de manière optimale à des conditions de réception à escompter.
